Europäisches Patentamt

(19) European Patent Office

Office européen des brevets

(11) EP 1 478 041 A2

(12) **EUROPEAN PATENT APPLICATION**

(43) Date of publication:
17.11.2004 Bulletin 2004/47

(51) Int Cl.7: **H01M 4/86**, H01M 4/88,
H01M 8/02

(21) Application number: 04011523.0

(22) Date of filing: 14.05.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **16.05.2003 JP 2003138559**

(71) Applicant: **Sanyo Electric Co., Ltd.**
**Moriguchi-shi, Osaka (JP)**

(72) Inventors:
• **Kabumoto, Hiroki**
  **Saitama-shi Saitama-ken 331-0823 (JP)**
• **Kanai, Hiroko**
  **Oura-gun Gunma-ken 370-0513 (JP)**

(74) Representative: **Glawe, Delfs, Moll & Partner**
**Patentanwälte**
**Postfach 26 01 62**
**80058 München (DE)**

(54) **Fuel cell**

(57) An object of the present invention is to provide a fuel cell capable of improving an output by reducing concentration polarization of a liquid fuel in an anode. The fuel cell comprises an anode and a cathode on both surfaces of an electrolyte membrane, supplies the liquid fuel to the anode, supplies an oxidant gas to the cathode, to react the liquid fuel with the oxidant gas and to generate power, wherein the anode comprises a gas diffusion layer constituted by filling a conductive porous support which is coated with a hydrophilic material with a conductive powder, and a catalyst layer.

FIG. 1

EP 1 478 041 A2

## Description

BACKGROUND OF THE INVENTION

The present invention relates to a fuel cell which directly receives a liquid fuel to generate power.

The fuel-cell takes out chemical energy which a fuel (hydrogen or the like) has directly as electric energy by electrode reaction, and is a power generation system which has almost no adverse influence on an environment because a reaction product is only water in principle. Conventionally, a hydrogen-rich gas which is a reformation of a source gas has been used as the fuel. In such a case, however, a reformer must be disposed in the power generation system, creating a problem of an enlarged device. Thus, in order to solve the problem of device enlargement, a fuel cell has been developed which directly receives a liquid fuel to generate power.

In the conventional direct liquid fuel type fuel cell which uses a liquid as the fuel, for example, a cell is constituted by making a solid polymeric cation exchanger an electrolyte membrane, and holding both sides of the electrolyte membrane between an anode and a cathode. The anode has a laminated structure of a gas diffusion layer constituted of woven or unwoven cloth made of carbon fibers and a platinum and ruthenium containing catalyst layer disposed thereon. A liquid fuel such as methanol or dimethyl ether (DME) is supplied to the anode, while air is supplied as an oxidant to the cathode.

Thus, electrochemical oxidation reaction of the liquid fuel occurs in the catalyst layer of the anode to generate a proton (H$^+$). The proton moves through the electrolyte membrane to reach the cathode. At this time, an electron is taken out to en external circuit to be used as electric energy. On the other hand, in the cathode, the proton moved through the electrolyte membrane reacts with oxygen in air to generate water. Further, in the anode, carbon dioxide is generated as a main product, and discharged to the outside of the cell system.

Here, according to the fuel cell, in order to smoothly supply the liquid fuel in the anode, a porous material of the gas diffusion layer is made of carbon paper treated by polyfluoroethylene fibers to improve water repellency (see PCT National Publication No. 11-510311).

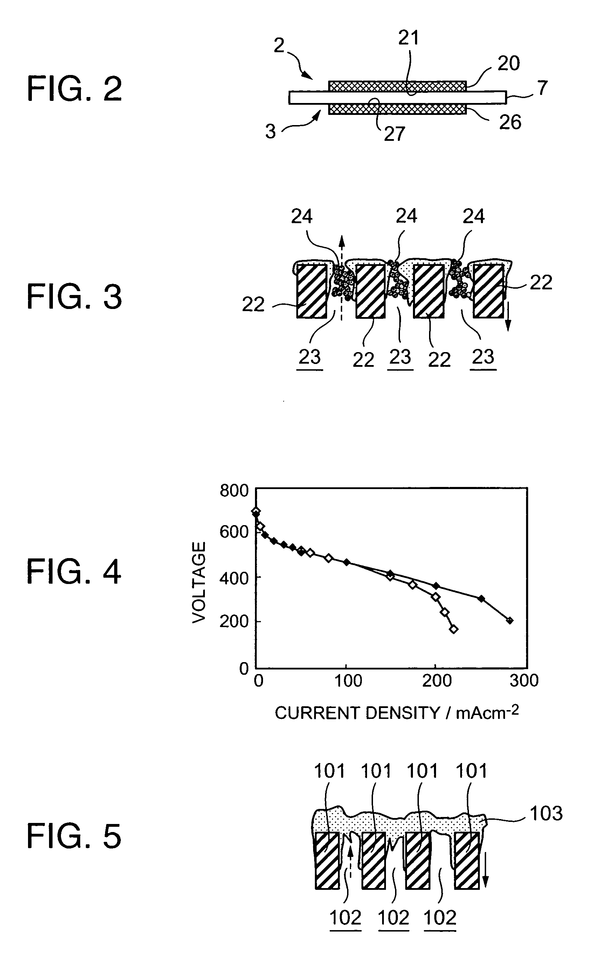

FIG. 5 is an expanded view of a carbon fiber on a liquid fuel supply side of a gas diffusion layer. In the drawing, a reference numeral 101 denotes a carbon fiber of a porous material which constitutes the liquid fuel supply side, and a reference numeral 102 denotes an aperture formed between the carbon fibers 101. A reference numeral 103 denotes methanol which is the liquid fuel supplied to the gas diffusion layer of an anode side.

However, in the aforementioned conventional fuel cell, because of the water repellency of the porous material used for the anode, as shown in FIG. 5, it is difficult for the methanol 103 which is the liquid fuel to permeate the carbon fiber 101 of the porous material. Consequently, a reduction occurs in permeability of the methanol into the anode. Therefore, sufficient supplying of the methanol which is the liquid fuel to the catalyst layer of the anode is impossible, causing a problem of an increase in concentration polarization of the methanol in the anode.

SUMMARY OF THE INVENTION

An object of the present invention is to provide a fuel cell capable of improving an output by reducing concentration polarization of a liquid fuel in an anode.

A first aspect of the present invention is directed to a fuel cell which comprises an anode and a cathode on both surfaces of an electrolyte membrane, supplies a liquid fuel to the anode, supplies an oxidant gas to the cathode, to react the liquid fuel with the oxidant gas and to generate power, wherein the anode comprises a gas diffusion layer constituted by filling a conductive porous support which is coated with a hydrophilic material with a conductive powder, and a catalyst layer.

A second aspect of the present invention is directed to the above fuel cell, wherein the porous support is made of carbon fibers.

A third aspect of the present invention is directed to the above fuel cell, wherein the gas diffusion layer contains 5 wt% to 60 wt% of the hydrophilic material with respect to a sum total of the conductive porous support and the hydrophilic material.

A fourth aspect of the present invention is directed to the above fuel cell, wherein the gas diffusion layer contains 20 wt% to 40 wt% of the hydrophilic material with respect to a sum total of the conductive porous support and the hydrophilic material.

A fifth aspect of the present invention is directed to the above fuel cell, wherein the conductive powder is carbon black.

A sixth aspect of the present invention is directed to the above fuel cell, wherein a water-repellent material is added to the carbon black.

A seventh aspect of the present invention is directed to the above fuel cell, wherein 5 wt% to 80 wt% of the water-repellent material with respect to the sum total of the conductive porous support and the water-repellent material is added to the carbon black.

An eighth aspect of the present invention is directed to the above fuel cell, wherein 20 wt% to 40 wt% of the water-repellent material with respect to the sum total of the conductive porous support and the water-repellent material is added to the carbon black.

A ninth aspect of the present invention is directed to the above fuel cell, wherein a dibutylphthalate absorption of the carbon black is 160 ml/100 g or more.

A tenth aspect of the present invention is directed to the above fuel cell, wherein a dibutylphthalate absorption of the carbon black is 360 ml/100 g or more.

An eleventh aspect of the present invention is directed to the above fuel cell, wherein the carbon black is present from the catalyst layer side of the gas diffusion layer to an opposite side thereof.

A twelfth aspect of the present invention is directed to the above fuel cell, wherein an amount of the carbon black with which the gas diffusion layer is filled is 1 mg/cm$^2$ to 20 mg/cm$^2$.

BRIEF DESCRIPTION OF THE DRAWINGS

FIG. 1 is a main section assembly view showing a constitution of a fuel cell according to the present invention;

FIG. 2 is a schematic sectional view of the cell of FIG. 1;

FIG. 3 is a partially expanded sectional view of a gas diffusion layer of an anode of FIG. 1;

FIG. 4 is a view showing a relation between a current and a voltage in each of a cell of an embodiment and a conventional cell; and

FIG. 5 is a partially expanded sectional view of a gas diffusion layer of a conventional anode.

DETAILED DESCRIPTION OF THE PREFERRED EMBODIMENT

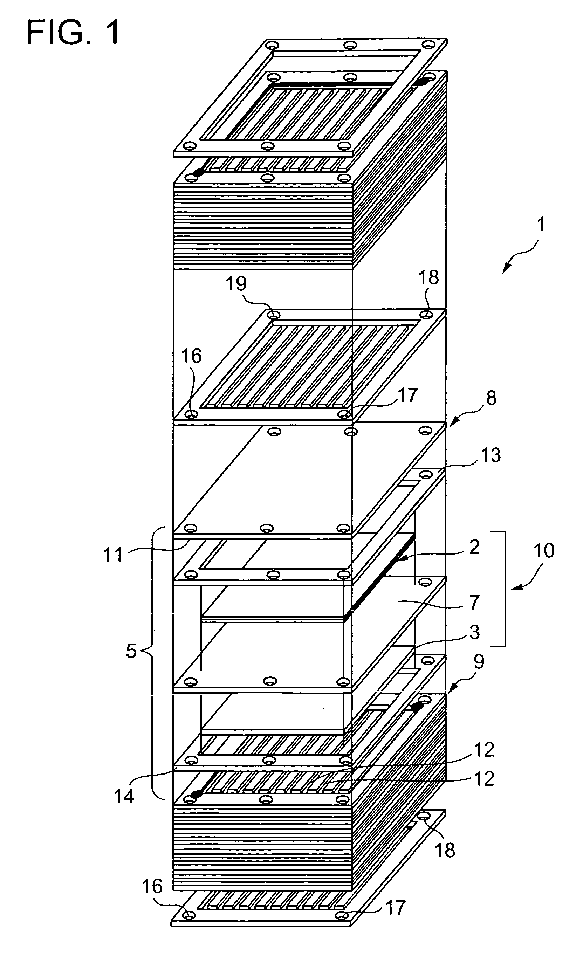

Next, a preferred embodiment of the present invention will be described in detail with reference to the accompanying drawings. A fuel cell 1 of the embodiment is a direct methanol type fuel cell (DMFC) which generates power by directly supplying a liquid organic fuel such as methanol or dimethyl ether (DME) from a fuel supply source (not shown) to an anode 2, and oxygen (oxidant gas) contained in air to a cathode 3. A constitution of the fuel cell 1 of the embodiment will be described by referring to FIG. 1. FIG. 1 is a main section assembly view showing the constitution of the fuel cell 1.

The fuel cell 1 comprises a cell 10 in which the anode (fuel electrode) 2 and the cathode (air electrode) 3 are arranged on both surfaces of an electrolyte membrane 7, and a pair of separators 8, 9 equipped with ribs to hold the cell therebetween.

The separators 8, 9 are constituted of conductive substrates prepared by elaborately processing carbon plates. An anode channel (fuel passage) 11 is constituted of a plurality of grooves in the separator 8 of the anode side. A cathode channel (air passage) 12 is similarly constituted of a plurality of grooves in the separator 9 of the cathode side.

Gaskets 13, 14 are disposed as sealing materials between an outer peripheral part of the electrolyte membrane 7 and outer peripheral parts of the separators 8, 9, and then the cell 10 is held between both sides of the separators 8, 9 to constitute a cell unit 5. Further, a plurality of such cell units 5 are stacked on each other, and both ends of the laminated cell unit 5 are held between end plates (not shown) to constitute the fuel cell 1.

Additionally, at corners of the separators 8, 9, through-holes 16, 17, 18; and 19 are formed to constitute manifolds for supplying/discharging the liquid fuel or a reaction gas. The through-holes 17, 19 thereamong are communicated with the anode channel 11 of the separator 8, and the through-holes 16, 18 are communicated with the cathode channel 12 of the separator 9.

According to the embodiment, for example, the electrolyte membrane 7 is constituted of a perfluorosulfonic acid polymeric film (e.g., Nafion 117 (product name)) which is a cation exchanger, and a thickness of the electrolyte membrane 7 is about, e.g., 175 μm. Additionally, the electrolyte membrane 7 is formed larger than the anode 2 and the cathode 3 by a predetermined size, i.e., a size which causes no inconvenience in miniaturization of the cell 1 itself.

According to the embodiment, the electrolyte membrane 7 uses the Nafion (product name) as the cation exchanger. In addition to this, a fluorine-containing polymer or a hydrocarbon polymer to which a sulfonic acid group, a hydroxyl group or the like is added, a polymer which contains a basic functional group such as polybenzimidazole or the like, or a complex thereof may be used.

On the other hand, as shown in FIG. 2, the anode 2 has a laminated structure of a gas diffusion layer 20 and a catalyst layer 21. Hereinafter, description will be made of (1) a constitution of the gas diffusion layer 20, (2) a constitution of the catalyst layer 21, and (3) a method for preparing the anode 2.

(1) Constitution of the gas diffusion layer 20

The gas diffusion layer 20 will be described by referring to FIG. 3. FIG. 3 is a partially expanded view of a surface of a side opposite the catalyst layer 21 of the gas diffusion layer 20 which constitutes the anode 2. The gas diffusion layer 20 is constituted by coating carbon paper as a conductive porous support made of carbon fibers 22 formed into woven or unwoven cloth with polyvinyl alcohol (not shown) as a hydrophilic material, and filling an aperture 23 formed between the carbon fibers 22 with carbon black 24 as a conductive powder.

(2) Constitution of the catalyst layer 21

Further, the catalyst layer 21 is stacked on a surface opposite a liquid fuel supply side of the gas diffusion layer 20 constituted in the aforementioned manner. The catalyst layer 21 is formed by mixing platinum-ruthenium black with a cation exchanger such as Nafion (product name) and, e.g., a screen printing method.

(3) Method for preparing the anode 2 of the embodiment

Regarding the anode 2 of the embodiment, to begin with, powdered polyvinyl alcohol as a hydrophilic material is dispersed in an ethanol aqueous solution, and carbon paper as a conductive porous support is dipped in the solution. Here, for example, carbon black of 200 µm in thickness is used, and sufficiently dipped in the solution. According to the embodiment, by using carbon paper made of carbon fibers as a conductive porous support, the porous support having an aperture 23 can be easily prepared, whereby productivity can be improved.

Subsequently, the carbon paper dipped in the solution is heated to about +80°C, and the ethanol aqueous solution as a solvent is removed. Further, the carbon paper is heated to about +150°C to be burned. Accordingly, a conductive porous support coated with the hydrophilic material is prepared. Incidentally, in this case, the hydrophilic material is added so that its weight ratio can be 5 wt% to 60 wt%, preferably 20 wt% to 40 wt%, with respect to the conductive porous support coated therewith.

On the other hand, a polytetrafluoroethylene dispersion liquid as a water-repellent material is mixed with carbon black 24 as a conductive powder to prepare slurry. According to the embodiment, as the carbon black 24, especially kechen black EC (product name) whose dibutylphthalate absorption is 160 ml/100g or more, preferably 360 ml/100 g or more, is used. Additionally, the embodiment uses the carbon black to which polytetrafluoroethylene as a water-repellent material is added by 5 wt% to 80 wt%, preferably 20 wt% to 40 wt%, with respect to a sumo total of the conductive porous support and the water-repellent material.

Then, the slurry is coated in the conductive porous support coated with the hydrophilic material, i.e., the carbon paper formed in the aforementioned manner, by a blade knife or the like to fill the same. At this time, a filling amount of the slurry in the carbon paper is set so that a filling density thereof can be about 5 mg/cm$^2$. Accordingly, the carbon black 24 to which the water-repellent material has been added continuously fills the carbon paper as the porous support from its liquid fuel supply side to the catalyst layer 21 side. Subsequently, the carbon paper is heated to about +150°C to be burned. Thus, the gas diffusion layer 20 of the anode 2 is formed.

Then, platinum-ruthenium black as a catalyst particle is mixed with 5 wt% Nafion (product name) as a cation exchanger to prepare a catalyst layer ink. The catalyst layer ink is coated on the gas diffusion layer 20 by a screen printing method to complete the anode 2. In this case, the catalyst layer ink is prepared so that a weight ratio between the catalyst particle and the Nafion (product name) as the cation exchanger can be catalyst: Nafion (product name)=9:1.

On the other hand, as shown in FIG. 2, the cathode 3 is structured by sequentially stacking a gas diffusion layer 26 and a catalyst layer 27 from the outside to the electrolyte membrane 7 side. The gas diffusion layer 26 is formed by mixing a polytetrafluoroethylene dispersion liquid as a water-repellent material and carbon black 24 (kechen black EC (product name) is used in the embodiment) as a conductive powder in carbon paper as a conductive porous support dipped in polytetrafluoroethylene as a water-repellent material to fill the same as in the case of the anode 2.

The catalyst layer 27 is formed by mixing platinum black as a catalyst particle with 5 wt% Nafion (product name) as a cation exchanger to prepare a catalyst layer ink, and coating the catalyst layer ink on the gas diffusion layer 26 by a screen printing method. Incidentally, as in the previous case, the catalyst layer ink is prepared so that a weight ratio between the catalyst particle and the Nafion (product name) as the cation exchanger can be catalyst: Nafion (product name)=9:1.

The cell 10 is constituted by holding the electrolyte membrane 7 between the electrodes 2,3, and executing adhesive molding by hot pressing at about +150°C while the electrodes 2, 3 are held between the separators 8, 9.

Next, description will be made of a difference in output between the cell 10 of the embodiment and the conventional cell in which the water-repellent material is added to the gas diffusion layer of the anode by referring to FIG. 4. FIG. 4 is a view showing a relation between a current and a voltage in each of the cell 10 of the embodiment and the conventional cell. For the cell 10 of the embodiment, the cell prepared in the aforementioned manner is used. For the conventional cell, a cell in which an anode is constituted similarly to the cathode 3 of the embodiment is used. That is, the conventional cell uses the anode and the cathode in both of which water-repellent materials are added to gas diffusion layers.

Incidentally, FIG. 4 shows measurement of power generation characteristics at +60°C by using a methanol aqueous solution of a concentration 1 mol/L as a liquid fuel for each cell, and supplying air as an oxidant gas. A black square indicates a measuring result of the cell 10 of the embodiment, and a white square indicates a measuring result of the conventional cell.

From the drawing, it can be understood that power generation characteristics are higher in the cell 10 of the embodiment than that in the conventional cell at a high current density. This may be attributed to improvements of supply efficiency of the liquid fuel in the anode 2 and discharge efficiency of carbon dioxide generated in the catalyst layer 21 over those of the conventional cell.

Thus, in the fuel cell 1, the liquid fuel is supplied to the liquid fuel supply manifold of the cell unit 5, and air is supplied to the oxidant gas supply manifold. Then, the liquid fuel supplied to the liquid fuel supply manifold is distributed through each anode channel 11 to be supplied to the anode 2. On the other hand, the air supplied to the oxidant gas supply manifold is supplied through each cathode channel 12 to the cathode 3. A superfluous gas is discharged from the oxidant gas discharge manifold.

Here, for the liquid fuel supplied to the anode 2, since the carbon fibers 22 of the gas diffusion layer 20 are coated with the hydrophilic materials as described above, a hollow part having hydrophilicity can be formed in the carbon fiber 22 near the surface of the porous support, and a liquid fuel passage can be formed to supply the liquid fuel to the catalyst layer 12 formed on the electrolyte membrane 7 side of the anode 2. Especially, by containing 5 wt% to 60 wt%, preferably 20 wt% to 40 wt%, of the hydrophilic material in the conductive porous support coated therewith as described above, it is possible to more improve diffusibility of the liquid fuel.

Accordingly, as indicated by a solid-line arrow of FIG. 3, the liquid fuel permeates the porous support through the liquid fuel passage. Then, after the liquid fuel is roughly uniformly diffused through the gas diffusion layer 20, it permeates the catalyst layer 21, and anode reaction is caused by a catalyst of the catalyst layer 21 to oxidize the liquid fuel (chemical formula (1)):

$$CH_3OH+H_2O \rightarrow CO_2+6H^++6e^- \qquad (1)$$

As indicated by a dotted-line arrow of FIG. 3, carbon dioxide generated by the anode reaction in the catalyst layer 21 is discharged to the outside through an aperture (small hole) in the structure of the carbon black 24 as a conductive powder fully supplied between the carbon fibers 22 of the gas diffusion layer 20. The aperture formed in the carbon black 24 is not closed by the permeation of the liquid fuel because it is small. A gas such as carbon dioxide generated in the catalyst layer 21 can be easily discharged therethrough to the outside.

Especially, according to the embodiment, since the carbon black 24 continuously fills the carbon paper as the porous support from its liquid fuel supply side to the catalyst layer 21 side, a liquid film of the liquid fuel formed on the liquid fuel supply side of the gas diffusion layer 20 becomes discontinuous, and a discharge passage of the carbon dioxide generated in the catalyst layer 21 can be surely obtained. Thus, inconvenience of staying of the carbon dioxide generated in the gas diffusion layer 20 can be prevented, diffusibility of the liquid fuel in the anode 2 can be improved, concentration polarization of the liquid fuel in power generation can be reduced, and performance of the fuel cell 1 can therefore be improved. Incidentally, the performance improvement of the fuel cell 1 of the invention is also apparent from an experiment result of FIG. 4.

According to the embodiment, for the carbon black 24, by using carbon black whose dibutylphthalate absorption is 160 ml/100 g or more, or 360 ml/100 g or more, it is possible to secure a large aperture volume in the structure of the carbon black, and to improve discharge efficiency of the carbon dioxide more.

Further, according to the embodiment, since the water-repellent material is added to the carbon black 24 as described above, it is possible to prevent inconvenience of closing of the aperture in the structure thereof by the liquid fuel, and to smoothly discharge the carbon dioxide generated in the catalyst layer 21 through the aperture in the structure of the carbon black 24 to the outside. Moreover, it is possible to suppress a reduction in an output of the fuel cell itself caused by conductivity division.

Especially, regarding the amount of the water-repellent material added to the carbon black 24, 5 wt% to 80 wt%, preferably 20 wt% to 40 wt%, of the water-repellent material is added with respect to the sum total of the conductive porous support and the water-repellent material. Accordingly, it is possible to improve discharge efficiency of the carbon dioxide generated in the catalyst layer 21.

A proton generated by the aforementioned anode reaction causes oxidation reduction reaction with oxygen (oxidant gas) contained in the air supplied to the cathode 3 in the electrolyte membrane 7 to generate power (chemical formula (2)). Incidentally, the power generated here is controlled by a control device (not shown) as control means for power generation.

$$3/2O_2+6H^++6e^- \rightarrow 3H_2O \qquad (2)$$

By the aforementioned constitution, according to the embodiment, the liquid fuel supplied to the anode 2 can be uniformly diffused in the gas diffusion layer 20 through the hydrophilic liquid fuel passage near the surface of the porous support which constitutes the gas diffusion layer 20 to permeate the catalyst layer 21. Thus, concentration polarization of the liquid fuel is reduced to enable improvement of the performance of the fuel cell.

Additionally, since the aperture formed in the porous support is filled with the conductive powder to which the water-repellent material is added, it is possible to discharge the carbon dioxide generated in the catalyst layer 21 to the outside through the small hole formed in the conductive powder. Accordingly, it is possible to reduce the concentration polarization of the liquid fuel in the anode 2.

According to the embodiment, since the carbon black 24 to which the water-repellent material is added fills the conductive porous support by 5 mg/cm², the conductive powder can be present from the catalyst layer 21 side of the gas diffusion layer 20 to the opposite side. The liquid film of the liquid fuel formed on the liquid fuel supply side of the gas diffusion layer 20 becomes discontinuous. Thus, it is possible to obtain the discharge passage of the carbon dioxide generated in the catalyst layer 21 more surely.

Incidentally, according to the embodiment, the carbon black 24 to which the water-repellent material is added fills the conductive porous support by about 5 mg/cm$^2$. However, by setting the amount of carbon black 24 to 1 mg/cm$^2$ to 20 mg/cm$^2$, the carbon black 24 can be properly present in the gas diffusion layer 20 from the catalyst layer 21 side thereof to the opposite side. Additionally, it is possible to prevent closing of the aperture of the porous support caused by filling with excessive carbon black 24. As a result, it is possible to prevent interference with diffusion of the liquid fuel.

According to the embodiment, the carbon paper is used as the conductive porous support. In addition to this, a carbon fiber of unwoven cloth, woven carbon cloth, or a metal mesh such as a platinum mesh or a gold-coated copper mesh may be used.

According to the embodiment, the polyvinyl alcohol is used as the hydrophilic material coated on the carbon paper. In addition to this, polyvinyl pyrrolidone, polybenzimidazole, colloidal silica, titanium oxide or zeolite may be used.

In order to provide more uniform hydrophilicity to the conductive porous support, a polymeric material among hydrophilic materials is preferably used. Further, regarding the addition amount of the hydrophilic material, by setting a weight ratio to 5 wt% to 60 wt%, preferably 20 wt% to 40 wt%, with respect to the conductive porous support coated with the hydrophilic material as described above, it is possible to improve diffusibility of the liquid fuel more.

Further, according to the embodiment, the kechen black EC (product name) is used as the conductive powder. In addition to this, other carbon black such as harness black or acetylene black may be used. In such a case, in order to improve discharge efficiency of the carbon dioxide generated in the catalyst layer 21 similarly to the embodiment, a larger aperture volume is preferable in a structure of the conductive carbon black.

Furthermore, according to the embodiment, the polytetrafluoroethylene is used as the water-repellent material added to the carbon black 24. In addition to this, a fluororesin such as a tetrafluoroethylene-perfluoroalkylvinyl ether copolymer, a tetrafluoroethyylene-hexafluoropropylene copolymer, a polyvinylidene fluoride, polyfluorovinyl, perfluoroalkoxy, tetrafluroethylene-ethylene copolymer, polychlorotrifluoroethylene, or poyehtersulfone may be used.

According to the embodiment, the two-element alloy of the platinum-ruthenium black is used as the catalyst particle of the catalyst layer 21 of the anode 2. In addition to this, a two-element alloy of platinum-molybdenum, platinum-iridium, platinum-tin, platinum-tungsten, platinum-titanium, or platinum-rhodium, or a multielement alloy of three elements or more which combine such elements may be used. Additionally, a catalyst metal which carries carbon black may be used.

Furthermore, according to the embodiment, the platinum black is used as the catalyst particle of the catalyst layer 27 of the cathode 3. In addition to this, a combination of alloys which constitute the catalyst particle of the catalyst layer 21 of the anode 2, or a catalyst metal which carries carbon black may be used.

Incidentally, according to the embodiment, the methanol and the DME are cited as the liquid fuel. However, similar effects can be exhibited even by other liquid fuel such as propanol, butanol, trimethoxymethane, ethylene glycol, or a formic acid. According to the embodiment, the air is cited as the oxidant gas. However, similar effects can be exhibited by oxygen, a hydrogen peroxide solution or the like.

As discussed above in detail, according to the present invention, the fuel cell comprises the anode and the cathode on both surfaces of the electrolyte membrane, supplies the liquid fuel to the anode, supplies the oxidant gas to the cathode, and reacts the liquid fuel with the oxidant gas to generate power. The anode comprises the gas diffusion layer constituted by filling the conductive porous support which is coated with the hydrophilic material with the conductive powder, and the catalyst layer. Thus, the hydrophilic hollow part is formed near the surface of the porous support of the gas diffusion layer, and the liquid fuel passage can be formed to supply the liquid fuel to the catalyst layer formed on the electrolyte membrane side of the anode.

The aperture formed in the porous support is filled with the conductive powder. In this case, however, the small hole is formed in the conductive powder. Thus, since the small hole is not closed by the liquid fuel, a gas such as carbon dioxide generated in the catalyst layer can be discharged to the outside.

Therefore, concentration polarization of the liquid fuel in the anode is reduced to enable output improvement of the fuel cell.

Here, the porous support is made of carbon fibers. Thus, the porous support having an aperture can be easily constituted to improve productivity.

Additionally, the gas diffusion layer contains 5 wt% to 60 wt% of the hydrophilic material with respect to the sum total of the conductive porous support and the hydrophilic material. Accordingly, diffusibility of the liquid fuel can be improved more. Further, the gas diffusion layer contains 20 wt% to 40 wt% of the hydrophilic material with respect to the sum total of the conductive porous support and the hydrophilic material. Accordingly, the diffusibility of the liquid fuel can be improved much more.

In the foregoing, the conductive powder is the carbon black. Thus, discharge efficiency of the carbon dioxide generated in the catalyst layer can be improved. Especially, by using the carbon black whose dibutylphthalate absorption is 160 ml/100 g or more, or 360 ml/100 g or more, a large aperture volume can be secured in the structure of the carbon black. Thus, it is possible to improve the discharge efficiency of the carbon dioxide more.

In each of the aforementioned inventions, the water-repellent material is added to the carbon black. Accordingly, it is possible to prevent inconvenience of closing of the aperture in the structure of the carbon black caused by the liquid fuel. Thus, it is possible to smoothly discharge the carbon dioxide generated in the catalyst layer to the outside through the aperture in the structure of the carbon black.

Especially, 5 wt% to 80 wt% of the water-repellent material is added to the carbon black with respect to the sum total of the conductive porous support and the water-repellent material. Further, 20 wt% to 40 wt% of the water-repellent material is added to the carbon black with respect to the sum total of the conductive porous support and the water-repellent material. Thus, it is possible to improve the discharge efficiency of the carbon dioxide generated in the catalyst layer.

By adding the water-repellent material to the carbon black as described above, it is possible to suppress a reduction in an output of the fuel cell itself caused by conductivity division.

Further, the carbon black is present from the catalyst layer side of the gas diffusion layer to the opposite side. Accordingly, the liquid film of the liquid fuel formed on the liquid fuel supply side of the gas diffusion layer becomes discontinuous, and it is possible to surely obtain the discharge passage of the carbon dioxide generated in the catalyst layer.

Therefore, it is possible to suppress inconvenience of closing of the carbon dioxide generated in the catalyst layer in the anode, to improve diffusibility of the liquid fuel in the anode, and to reduce concentration polarization of the liquid fuel in power generation, thereby improving the performance of the fuel cell.

Furthermore, according to the invention, in the foregoing, by setting the amount of carbon black filling the gas diffusion layer to 1 mg/cm$^2$ to 20 mg/cm$^2$, the carbon black can be properly present in the gas diffusion layer from the catalyst layer side thereof to the opposite side. Additionally, it is possible to prevent closing of the aperture of the porous support caused by filling with excessive carbon black. As a result, it is possible to prevent interference with diffusion of the liquid fuel.

**Claims**

1. A fuel cell which comprises an anode and a cathode on both surfaces of an electrolyte membrane, supplies a liquid fuel to the anode, supplies an oxidant gas to the cathode, to react the liquid fuel with the oxidant gas and to generate power,
   wherein the anode comprises a gas diffusion layer constituted by filling a conductive porous support which is coated with a hydrophilic material with a conductive powder, and a catalyst layer.

2. The fuel cell according to claim 1, wherein the porous support is made of carbon fibers.

3. The fuel cell according to claim 1 or 2, wherein the gas diffusion layer contains 5 wt% to 60 wt% of the hydrophilic material with respect to a sum total of the conductive porous support and the hydrophilic material.

4. The fuel cell according to claim 1 or 2, wherein the gas diffusion layer contains 20 wt% to 40 wt% of the hydrophilic material with respect to a sum total of the conductive porous support and the hydrophilic material.

5. The fuel cell according to one of claims 1 to 4, wherein the conductive powder is carbon black.

6. The fuel cell according to claim 5, wherein a water-repellent material is added to the carbon black.

7. The fuel cell according to claim 6, wherein 5 wt% to 80 wt% of the water-repellent material with respect to the sum total of the conductive porous support and the water-repellent material is added to the carbon black.

8. The fuel cell according to claim 6, wherein 20 wt% to 40 wt% of the water-repellent material with respect to the sum total of the conductive porous support and the water-repellent material is added to the carbon black.

9. The fuel cell according to one of claims 5 to 8, wherein a dibutylphthalate absorption of the carbon black is 160 ml/100 g or more.

10. The fuel cell according to one of claims 5 to 8, wherein a dibutylphthalate absorption of the carbon black is 360 ml/100 g or more.

11. The fuel cell according to one of claims 5 to 10, wherein the carbon black is present from the catalyst layer side of the gas diffusion layer to an opposite side thereof.

12. The fuel cell according to one of claims 5 to 11, wherein an amount of the carbon black with which the gas diffusion layer is filled is 1 mg/cm$^2$ to 20 mg/cm$^2$.

# FIG. 1

FIG. 2

FIG. 3

FIG. 4

FIG. 5